(19) Europäisches Patentamt
European Patent Office
Office européen des brevets

(11) **EP 1 655 338 B2**

(12) **NEW EUROPEAN PATENT SPECIFICATION**
After opposition procedure

(45) Date of publication and mention
of the opposition decision:
**19.09.2012 Bulletin 2012/38**

(45) Mention of the grant of the patent:
**17.01.2007 Bulletin 2007/03**

(21) Application number: **04026095.2**

(22) Date of filing: **03.11.2004**

(51) Int Cl.:
*C08L 23/06* (2006.01)     *C08L 23/04* (2006.01)
*C08F 10/02* (2006.01)     *C08L 23/08* (2006.01)

(54) **Multimodal polyethylene composition for injection moulded transport packaging articles**

Multimodale Polyethylenzusammensetzung für durch Spritzgussverfahren hergestellte Transportverpackungsartikel

Composition de polyéthylène multimodal pour le moulage par injection d'articles d'emballage de transport

(84) Designated Contracting States:
**AT BE BG CH CY CZ DE DK EE ES FI FR GB GR HU IE IS IT LI LU MC NL PL PT RO SE SI SK TR**

(43) Date of publication of application:
**10.05.2006 Bulletin 2006/19**

(73) Proprietor: **Borealis Technology Oy**
**06101 Porvoo (FI)**

(72) Inventors:
• **Nord-Varhaug Katrin**
**3942 Porsgrunn (NO)**
• **Staal Eggen Svein**
**3947 Langangen (NO)**
• **Rörvik Tine**
**3922 Porsgrunn (NO)**

(74) Representative: **Kador & Partner**
**Corneliusstrasse 15**
**80469 München (DE)**

(56) References cited:
EP-A- 1 460 105     EP-A1- 0 492 656
WO-A1-00/71615     WO-A1-03/39984
WO-A1-05/14680     WO-A1-97/43323
US-A1- 2002 045 711     US-B1- 6 191 227
US-B1- 6 632 884

EP 1 655 338 B2

**Description**

The present invention relates to a polyethylene composition for injection moulded articles, in particular for transport packaging, houseware and thin wall packaging applications. Furthermore, the present invention relates to a process for the production of said composition, an injection moulded article comprising said composition and to the use of said composition for the production of an injection moulded article.

Injection moulding may be used to make a wide variety of articles including articles having relatively complex shapes and a range of sizes. Injection moulding is, for instance, suited to the manufacture of articles used in transportation packaging which often have a particular form suited to the objects which they carry. Examples of such articles include boxes, bins, pallets, pails, trays and crates. Furthermore, injection moulding is widely used to produce articles for houseware applications, such as sink bowls and drainers, mixing bowls, food containers and buckets, as well as to produce thin wall packaging articles such as open top plastic containers for frozen or fresh food or non-food applications like paint, adhesives, cosmetics and pharmaceuticals.

Injection moulding is a moulding process in which a polymer is melted and then filled into a mould by injection. During initial injection, a high pressure is used and the polymer melt is compressed. Thus, upon injection into the mould the polymer melt initially expands or "relaxes" to fill the mould. The mould, however, is at a lower temperature than the polymer melt therefore as the polymer melt cools, shrinkage tends to occur. To compensate for this effect, further polymer melt may be slowly injected into the mould. Thereafter the polymer melt is cooled further to enable the moulded article to be removed from the mould without causing deformation.

An important property of the polymer to be injection moulded is therefore its rheology. Rheology is a measure of non-Newtonian melt flow and it is crucial in injection moulding that the polymer melt have a flow within certain limits to ensure that the final product properties are desirable. For example, the flow of the polymer melt must be sufficiently high to enable it to flow to all areas of the mould and thus to form an article of the desired shape. Also, the higher the flow of the polymer melt the greater the speed at which it can be injected into the mould and the shorter the processing time.

Polyethylenes conventionally used for injection moulding are such having a narrow molecular weight distribution to reach the desired impact strength and stiffness, on the sacrifice of good flow properties. Thus, for improving the flow properties, polyethylenes with broader molecular weight distribution have been made or with lower average molecular weight (higher $MFR_2$). However, polymers having broad molecular weight distributions tend to yield products having poorer stiffness and poor impact properties and polymers with lower molecular weight tend to yield products having poor impact strength and poor environmental stress crack resistance (ESCR) properties. Thus, the performance of injection moulded articles made of such polymers in applications such as packaging, where impact strength and stiffness are important, is reduced.

One way in which this problem has been addressed is to heat the moulding polymer to a higher temperature prior to injection. Since flow increases with increasing temperature, this allows polymers having poorer flow properties, but better stiffness and impact strength, to be used in an injection moulding process. The disadvantage of this strategy, however, is that the polymer melt needs to cool for a much longer period of time following filling into the mould in order to reach a temperature at which the moulded article can be removed from the mould without deformation. During this extended cooling time shrinkage is much more likely to occur. Also many fewer articles can be produced per unit of time and productivity is significantly decreased.

There remains a need therefore for a polymer composition suitable for use in injection moulding, in particular for transport packaging and houseware applications, which provides a combination of, on the one hand, superior flow properties which allow for easy processing even at low temperatures and hence allow for increased productivity (output), and, on the other hand, excellent mechanical properties including excellent impact strength, stiffness, low creep, high durability, and low shrinkage. Furthermore, the composition should also exhibit a satisfactory degree of environmental stress cracking resistance (ESCR).

It is emphasized that although these properties at least in part are contrary to each other, e.g. high flow and good impact strength, to provide a polyethylene composition for injection moulding, each of them must be achieved.

It has now been surprisingly found that by providing a polyethylene composition having a particular molecular weight distribution so that a specific relation between shear thinning index or spiral flow and melt flow rate of the composition is achieved, a composition which not only has excellent rheological, i.e. flow, properties but also good mechanical properties such as impact strength and stiffness after injection moulding is furnished.

Accordingly, the present invention provides a polyethylene composition wherein

(i) the composition has an $MFR_2$ of 0.1 to 100 g/10min,
(ii) the spiral flow and the $MFR_2$ of the composition satisfy the following relation. Spiral flow$_{(1000\ bar)}$ [cm] $\geq$ $MFR_2$ [g/10 min.] cm/(g/10 min.) + 45, and
(iii) the composition has a Charpy impact strength (23°C) of 3 kJ/m$^2$ or more.

The polyethylene composition preferably provides the following properties:

(i) the composition has an $MFR_2$ of 0.1 to 100 g/10min, and

(ii) the shear thinning index $SHI_{(1,100)}$ and the log $MFR_2$ of the composition satisfy the following relation: $SHI_{(1,100)} \geq$ -5.5 log $MFR_2$ [g/10min]/(g/10min) + 9.66,

(iii) the composition has a Charpy impact strength (23°C) of 3 $kJ/m^2$ or more.

It has been found that the polyethylene compositions according to the invention provide a improved material suited for injection moulding, in particular for transport packaging and houseware applications, which combines very good flow properties with excellent mechanical properties, such as high impact strength and stiffness. At the same time, the compositions according to the invention exhibit good ESCR and the injection moulded articles produced therewith show low warpage. Due to the excellent flow properties of the compositions, a higher throughput in injection moulding can be reached, more complex moulds can be used and/or lower moulding temperatures can be used leading i.a. to decreased degradation of the polymer.

By ethylene copolymer is meant a polymer the majority by weight of which derives from ethylene monomer units. The comonomer contribution preferably is up to 10% by mol, more preferably up to 5 % by mol, and may derive from other copolymerisable monomers, generally $C_{3-20}$, especially $C_{3-10}$, comonomers, particularly singly or multiply ethylenically unsaturated comonomers, in particular $C_{3-10}$ $\alpha$-olefins such as propene, but-1-ene, hex-1-ene, oct-1-ene, 4-methyl-pent-1-ene etc.

In the following, preferred features for both embodiments of the polyethylene composition according to the invention are described.

Preferably, the composition comprises

(A) a first ethylene homo- or copolymer fraction, and

(B) a second ethylene homo- or copolymer fraction,

wherein

(iv) fraction (A) has a lower average molecular weight than fraction (B),

Usually, a polyethylene composition comprising at least two polyethylene fractions, which have been produced under different polymerisation conditions resulting in different (weight average) molecular weights and molecular weight distributions for the fractions, is referred to as "multimodal". Accordingly, in this sense the compositions of the invention are multimodal polyethylenes. The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Preferably, the shear thinning index $SHI_{(1,100)}$ and the log $MFR_2$ of the composition satisfy the following relation:

$$SHI_{(1,100)} \geq -5.5 \text{ log } MFR_2 \text{ [g/10min]/(g/10min) + 10.66,}$$

and more preferably the shear thinning index $SHI_{(1,100)}$ and the log $MFR_2$ of the composition satisfy the following relation:

$$SHI_{(1,100)} \geq -5.5 \text{ log } MFR_2 \text{ [g/10min]/(g/10min) + 11.66.}$$

Further preferred, the shear thinning index $SHI_{(1,100)}$ and the log $MFR_2$ of the composition satisfy the following relation:

$$SHI_{(1,100)} \leq -9 \log MFR_2 \text{ [g/10min]/(g/10min)} + 20.71,$$

and more preferably the shear thinning index SHI and the log $MFR_2$ of the composition satisfy the following relation:

$$SHI_{(1,100)} \leq -9 \log MFR_2 \text{ [g/10min]/(g/10min)} + 19.21.$$

Further preferred, the composition has an shear thinning index $SHI_{(1,100)}$ of at least 4, more preferably of at least 6, still more preferably of at least 8, still more preferably of at least 9, and most preferably of at least 10.
The composition preferably has an shear thinning index $SHI_{(1,100)}$ of at most 22, more preferably of at most 15, and most preferably of at most 12.
In a further preferred embodiment, the shear thinning index $SHI_{(1,100)}$ and the $MFR_2$ of the composition satisfy the following relation:

$$SHI_{(1,100)} \geq -0.3056 \, MFR_2 \text{ [g/10min]/(g/10min)} + 8.61,$$

more preferably the shear thinning index $SHI_{(1,100)}$ and the $MFR_2$ of the composition satisfy the following relation:

$$SHI_{(1,100)} \geq -0.3056 \, MFR_2 \text{ [g/10min]/(g/10min)} + 9.61,$$

and most preferably the shear thinning index $SHI_{(1,100)}$ and the $MFR_2$ of the composition satisfy the following relation:

$$SHI_{(1,100)} \geq -0.3056 \, MFR_2 \text{ [g/10min]/(g/10min)} + 10.61.$$

Furthermore, the shear thinning index $SHI_{(1,100)}$ and the $MFR_2$ of the composition preferably satisfy the following relation:

$$SHI_{(1,100)} \leq -0.5 \, MFR_2 \text{ [g/10min]/(g/10min)} + 19,$$

and more preferably the shear thinning index SHI and the $MFR_2$ of the composition satisfy the following relation:

$$SHI_{(1,100)} \leq -0.5 \, MFR_2 \text{ [g/10min]/(g/10min)} + 17.5.$$

In a further preferred embodiment, the spiral flow$_{(1000 \text{ bar})}$ and the $MFR_2$ of the composition according to the invention preferably satisfy the following relation:

$$\text{Spiral flow}_{(1000 \text{ bar})} \text{ [cm]} \geq MFR_2 \text{ [g/10min]cm/(g/10min)} + 46,$$

and more preferably the spiral flow and the $MFR_2$ of the composition satisfy the following relation:

4

$$\text{Spiral flow}_{(1000 \text{ bar})} \text{ [cm]} \geq \text{MFR}_2 \text{ [g/10min]cm/(g/10min)} + 47.$$

Furthermore, the spiral flow$_{(1000 \text{ bar})}$ and the MFR$_2$ of the composition according to the invention preferably satisfy the following relation:

$$\text{Spiral flow}_{(1000 \text{ bar})} \text{ [cm]} \leq 2.5\text{MFR}_2 \text{ [g/10min]cm/(g/10min)} + 48.$$

Preferably, the composition of the invention have a Charpy impact strength (23 °C) of 4 kJ/m$^2$ or more, still more preferably 5 kJ/m$^2$ or more and most preferably 6 kJ/m$^2$ or more.

Usually, the compositions have a Charpy impact strength (23°C) of up to 10 kJ/m$^2$, more preferably up to 15 kJ/m$^2$, and most preferably of up to 20 kJ/m2.

Furthermore, preferably the compositions have a Charpy impact strength (-20°C) of 3 kJ/m$^2$ or more, more preferably of 3.5 kJ/m$^2$.

Usually, the compositions have a Charpy impact strength (-20°C) of up to 6.5 kJ/m$^2$, more preferably of up to 10 kJ/m$^2$.

The spiral flow at 1000 bar (spiral flow$_{(1000}$ bar)) of the compositions, which is measured as explained in detail below, preferably is 50 cm or more, more preferably is 51 cm or more, still more preferably is 52 cm or more, still more preferably is 56 cm or more, still more preferably is 58 cm or more, still more preferably is 60 cm or more, and most preferably is 63 cm or more.

Furthermore, the spiral flow$_{(1000 \text{ bar})}$ of the compositions preferably is 70 cm or less, more preferably is 68 cm or less.

The spiral flow at 1400 bar (spiral flow$_{(1400 \text{ bar})}$) preferably is at least 69 cm, more preferably at least 70 cm, still more preferably at least 72 cm, still more preferably at least 75 cm , still more preferably is at least 80 cm, and most preferably is at least 81 cm.

Furthermore, the spiral flow$_{(1400 \text{ bar})}$ is preferably 90 cm or less, more preferably 86 cm or less.

The composition preferably has an MFR$_2$ of 1 or more, more preferably of 2 or more.

Further, the composition preferably has an MFR$_2$ of 50 or below, more preferably of 20 or below.

The density of the composition preferably is 930 kg/m$^3$ or more, more preferably is 940 kg/m$^3$ or more, still more preferably is 950 kg/m$^3$, still more preferably is 955 kg/m$^3$or more, still more preferably is 957 kg/m$^3$ or more, and most preferably is 958 kg/m$^3$ or more.

Furthermore, the density of the composition preferably is 980 kg/m$^3$ or lower, and more preferably is 975 kg/m$^3$ or lower.

Preferably, the composition of the invention has an Tensile modulus of at least 900 MPa, more preferably at least 950 MPa, more preferably at least 1000 MPa and most preferably at least 1050 MPa. Typically, an upper limit for the Tensile modulus is 1500 MPa.

The polyethylene composition preferably has a molecular weight distribution MWD, being the ratio of the weight average molecular weight M$_w$ and the number average molecular weight M$_n$, of 5 or more, more preferably of 10 or more and most preferably of 14 or more.

Furthermore, the composition preferably has an MWD of 60 or below, more preferably of 45 or below, still more preferably of 30 or below and most preferably of 25 or below.

The weight average molecular weight M$_w$ of the composition preferably is at least 50 kD, more preferably at least 80 kD, and most preferably at least 100 kD. Furthermore, the M$_w$ of the composition preferably is at most 200 kD, more preferably 180 kD.

The composition preferably has a crystallinity of 60 to 90 %, preferably 70 to 90 %. Crystallinity is determined by DSC analysis.

Preferably, the crystalline melting point of the composition is between 125 and 140 °C as determined by DSC analysis.

The composition preferably has a shrinkage 325 g in the flow direction of 2 % or below, usually of 1 to 2 %.

The composition preferably has a warpage 550 bar/6sec of -4.5 % or above, usually of -4.5 to -2 %.

Further preferred, the weight ratio of fraction (A) to fraction (B) in the composition is in the range 30:70 to 70:30, more preferably 35:65 to 65:35, most preferably 40:60 to 60:40.

Fractions (A) and (B) may both be ethylene copolymers or ethylene homopolymers, although preferably at least one of the fractions is an ethylene copolymer.

Preferably, the composition comprises an ethylene homopolymer and an ethylene copolymer component.

Where one of the components is an ethylene homopolymer, this is preferably the component with the lower weight average molecular weight ($M_w$), i.e. fraction (A).

The lower molecular weight fraction (A) preferably has an $MFR_2$ of 10 g/10min or higher, more preferably of 20 g/10min or higher, and most preferably 30 g/10min or higher.

Furthermore, fraction (A) preferably, has an $MFR_2$ of 1000 g/10 min or lower, preferably 500 g/10 min or lower, and most preferably 300 g/10min or lower.

The weight average molecular weight $M_w$ of fraction (A) preferably is 10 kD or higher, more preferably is 20 kD or higher.

Furthermore, $M_w$ of fraction (A) preferably is 90 kD or lower, more preferably 85 kD or lower, and most preferably is 80 kD or lower.

Preferably, fraction (A) is an ethylene homo- or copolymer with a density of at least 965 kg/m$^3$.

Most preferably, fraction (A) is an ethylene homopolymer.

The higher molecular weight fraction (B) preferably has an $M_w$ of 60 kD or higher, more preferably of 100 kD or higher.

Furthermore, fraction (B) preferably has an $M_w$ of 500 kD or lower, more preferably of 400 kD or lower.

Preferably, fraction (B) is an ethylene homo- or copolymer with a density of less than 965 kg/m$^3$.

Most preferably, fraction (B) is a copolymer. It may be noted that the term ethylene copolymer is used herein to relate to a polyethylene deriving from ethylene and one or more copolymerisable comonomers. Preferably, the copolymer component(s) of the composition of the invention will contain at least 0.001 mol%, more preferably at least 0.005 mol%, and most preferably at least 0.01 mol % of non-ethylene comonomer units. Furthermore, preferably the copolymer contains at most 0.3 mol % of such comonomer units.

Preferred ethylene copolymers employ alpha-olefins (e.g. $C_{3-12}$ alpha-olefins) as comonomers. Examples of suitable alpha-olefins include but-1-ene, hex-1-ene and oct-1-ene. But-1-ene is an especially preferred comonomer.

The polyethylene composition may also contain minor quantities of additives such as pigments, nucleating agents, antistatic agents, fillers, antioxidants, etc., generally in amounts of up to 10 % by weight, preferably up to 5 % by weight.

Where herein features of fractions (A) and/or (B) of the composition of the present invention are given, these values are generally valid for the cases in which they can be directly measured on the respective fraction, e.g. when the fraction is separately produced or produced in the first stage of a multistage process.

However, the composition may also be and preferably is produced in a multistage process wherein e.g. fractions (A) and (B) are produced in subsequent stages. In such a case, the properties of the fractions produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

A multimodal (e.g. bimodal) polyethylene as hereinbefore described may be produced by mechanical blending two or more polyethylenes (e.g. monomodal polyethylenes) having differently centred maxima in their MWDs. Thus viewed from a further aspect the invention provides a process for the preparation of a polyethylene composition as hereinbefore described comprising blending two or more polyethylenes (e.g. monomodal polyethylenes) having differently centred maxima in their molecular weight distributions. Blending may be carried out in any conventional blending apparatus.

The monomodal polyethylenes required for blending may be available commercially or may be prepared using any conventional procedure known to the skilled man in the art. Each of the polyethylenes used in a blend and/or the final polymer composition may have the properties hereinbefore described for the lower molecular weight component, higher molecular weight component and the composition, respectively.

The polyethylene composition according the invention in the preferred embodiment where the composition comprises

(A) a first ethylene homo- or copolymer fraction, and

(B) a second ethylene homo- or copolymer fraction,

wherein fraction (A) has a lower average molecular weight than fraction (B), preferably is produced so that at least one of fractions (A) and (B), preferably (B), is produced in a gas-phase reaction.

Further preferred, one of the fractions (A) and (B) of the polyethylene composition, preferably fraction (A), is produced in a slurry reaction, preferably in a loop reactor, and one of the fractions (A) and (B), preferably fraction (B), is produced in a gas-phase reaction.

Preferably, the multimodal polyethylene composition may be produced by polymerisation using conditions which create a multimodal (e.g. bimodal) polymer product, e.g. using a catalyst system or mixture with two or more different catalytic sites, each site obtained from its own catalytic site precursor, or using a two or more stage, i.e. multistage, polymerisation process with different process conditions in the different stages or zones (e.g. different temperatures, pressures, polymerisation media, hydrogen partial pressures, etc).

Preferably, the multimodal (e.g. bimodal) composition is produced by a multistage ethylene polymerisation, e.g. using a series of reactors, with optional comonomer addition preferably in only the reactor(s) used for production of the higher/highest molecular weight component(s) or differing comonomers used in each stage. A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

Polymer compositions produced in a multistage process are also designated as "in-situ"-blends.

Accordingly, it is preferred that fractions (A) and (B) of the polyethylene composition are produced in different stages of a multistage process.

Preferably, the multistage process comprises at least one gas phase stage in which, preferably, fraction (B) is produced.

Further preferred, fraction (B) is produced in a subsequent stage in the presence of fraction (A) which has been produced in a previous stage.

It is previously known to produce multimodal, in particular bimodal, olefin polymers, such as multimodal polyethylene, in a multistage process comprising two or more reactors connected in series. As instance of this prior art, mention may be made of EP 517 868, which is hereby incorporated by way of reference in its entirety, including all its preferred embodiments as described therein, as a preferred multistage process for the production of the polyethylene composition according to the invention.

Preferably, the main polymerisation stages of the multistage process for producing the composition according to the invention are such as described in EP 517 868, i.e. the production of fractions (A) and (B) is carried out as a combination of slurry polymerisation for fraction (A)/gas-phase polymerisation for fraction (B). The slurry polymerisation is preferably performed in a so-called loop reactor. Further preferred, the slurry polymerisation stage precedes the gas phase stage.

Optionally and advantageously, the main polymerisation stages may be preceded by a prepolymerisation, in which case up to 20 % by weight, preferably 1 to 10 % by weight, more preferably 1 to 5 % by weight, of the total composition is produced. The prepolymer is preferably an ethylene homopolymer (High Density PE). At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end.

The polymerisation catalysts include coordination catalysts of a transition metal, such as Ziegler-Natta (ZN), metallocenes, non-metallocens, Cr-catalysts etc. The catalyst may be supported, e.g. with conventional supports including silica, Al-containing supports and magnesium dichloride based supports. Preferably the catalyst is a ZN catalyst, more preferably the catalyst is non-silica supported ZN catalyst, and most preferably $MgCl_2$-based ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention reference is made to WO2004055068 and WO2004055069 of Borealis, EP 0 688 794 and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The resulting end product consists of an intimate mixture of the polymers from the two or more reactors, the different molecular-weight-distribution curves of these polymers together forming a molecular-weight-distribution curve having a broad maximum or two or more maxima, i.e. the end product is a bimodal or multimodal polymer mixture.

It is preferred that the base resin, i.e. the entirety of all polymeric constituents, of the composition according to the invention is a bimodal polyethylene mixture consisting of fractions (A) and (B), optionally further comprising a small prepolymerisation fraction in the amount as described above. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100 °C, and most preferably is 82 to 97 °C.

A chain-transfer agent, preferably hydrogen, is added as required to the reactors, and preferably 100 to 800 moles of $H_2$/kmoles of ethylene are added to the reactor, when the LMW fraction is produced in this reactor, and 500 to 1500 moles of $H_2$/kmoles of ethylene are added to the gas phase reactor when this reactor is producing the HMW fraction.

Preferably, the polyethylene composition is produced with a rate of at least 5 tons/h, more preferably at least 10 ton/h, and most preferably at least 15 tons/h.

In the production of the composition of the present invention, preferably a compounding step is applied, wherein the composition of the base resin, i.e. the blend, which is typically obtained as a base resin powder from the reactor, is extruded in an extruder and then pelletised to polymer pellets in a manner known in the art.

Optionally, additives or other polymer components can be added to the composition during the compounding step in the amount as described above. Preferably, the composition of the invention obtained from the reactor is compounded in the extruder together with additives in a manner known in the art.

The extruder may be e.g. any conventionally used extruder.. As an example of an extruder for the present compounding step may be those as supplied by Japan steel works, Kobe steel or Farrel-Pomini, e.g. JSW 460P.

In one embodiment, the extrusion step is carried out using production rates of at least 400, at least 500, at least 1000 kg/h may be used in said compounding step.

In another embodiment the compounding step can be effected with production rate of that least 5 tons/h, preferably at least 15 tons/h, more preferably at least 20 or 25 tons/h or even at least 30 or more tons/h, such as at least 50, such 1-50, preferably 5-40, 10-50, in some embodiments 10-25 tons/h.

Alternatively, production rates at least 20 tons/h, preferably at least 25 tons/h, even at least 30 tons/h, e.g. 25-40 tons/h may be desired during the compounding step.

Preferably, in said extrusion step, a total SEI (specific energy input) of the extruder may be at least 150, 150-400, 200-350, 200-300 kWh/ton.

It is known that the temperature of the polymer melt may vary in the extruder, the highest (max) melt temperature of the composition in the extruder during the extrusion step is typically more than 150°C, suitably between 200 to 350°C, preferably 250 to 310°C, more pref. 250 to 300°C.

Still further, the present invention relates to an injection moulded article, preferably a transport packaging, houseware or thin-wall packaging article, comprising a polyethylene composition as described above and to the use of such a polyethylene composition for the production of an injection moulded article, preferably a transport packaging, houseware or thin-wall packaging article.

Injection moulding of the composition hereinbefore described may be carried out using any conventional injection moulding equipment. A typical injection moulding process may be carried out a temperature of 190 to 275 °C.

Preferably, the composition of the invention is used for the production of a transport packaging or houseware article, more preferably of a transport packaging article.

Typical transport packaging articles which may be produced by injection moulding the composition hereinbefore described include boxes, bins, pallets, pails, trays and crates (e.g. crates, especially beer crates). Typically these have a complex shape specifically designed to carry particular objects, e.g. bottles.

**Experimental and Examples**

1. Definitions and measurement methods

a) Molecular weight

The weight average molecular weight $M_w$ and the molecular weight distribution (MWD = $M_w/M_n$ wherein $M_n$ is the number average molecular weight and $M_w$ is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: $9.54 \times 10^{-5}$ and a: 0.725 for PS, and K: $3.92 \times 10^{-4}$ and a: 0.725 for PE). The ratio of $M_w$ and $M_n$ is a measure of the broadness of the distribution, since each is influenced by the opposite end of the "population".

b) Density

All densities are measured according to ISO 1183/D.

c) Melt Flow Rate/Flow Rate Ratio

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg ($MFR_2$), 5 kg ($MFR_5$) or 21.6 kg ($MFR_{21}$).

d) Shear Thinning Index SHI

Dynamic rheological measurements were carried out with a rheometer, namely Rheometrics RDA-II QC, on compression moulded samples under nitrogen atmosphere at 190 °C using 25 mm diameter plates and plate geometry 1.2 mm gap. The oscillatory shear experiments were done within the linear viscosity range of strain at frequencies from 0.05 to 300 rad/s (ISO 6721-1).

The values of storage modulus (G'), loss modulus (G") complex modulus (G*) and complex viscosity (eta*) were obtained as a function of frequency (omega). Eta(100 rad/s) is used as abbreviation for the complex viscosity at 100 rad/sec shear rate.

Shear thinning index (SHI), which is correlating with MWD and is independent of $M_w$, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

SHI value is obtained by calculating the complex viscosities $eta^*_{(1)}$ and $eta^*_{(100)}$ at a constant shear stress of 1 kPa and 100 kPa, respectively. The shear thinning index $SHI_{(1/100)}$ is defined as the ratio of the two viscosities $eta^*_{(1)}$ and $eta^*_{(100)}$.

The definitions and measurement conditions are also described in detail on page 8 line 29 to page 11, line 25 of WO 00/22040.

e) Charpy impact strength

Charpy impact strength was determined according to ISO 179:2000 on V-notched samples at 23 °C (Charpy impact strength (23°C)) and -20 °C (Charpy impact strength (-20°C))

f) Spiral flow

Spiral Test is carried out using an Engel ES330/65 cc90 injection moulding apparatus with a spiral mould and pressure of 600, 1000 or 1400 bar
screw diameter: 35 mm
max. piston displacement: 150 cm$^3$
spec. injection pressure: 600, 1000, or 1400 bar
tool form: oval form; provided by Axxicon; thickness 2 mm, breadth: 5 mm
temperature in pre-chamber and die: 230°C
temperature in zone 2/zone 3/zone 4/zone 5: 230°C/230°C/225°C/200°C
injection cycle: injection time including holding: 10 s
cooling time: 15 s
injection pressure: Follows from the predetermined length of the
testing material.
dwell pressure = injection pressure
screw speed: 30 rpm

system pressure: 10 bar

metering path: should be chosen so that the screw stops 20 mm before its final position at the end of the dwell pressure.

tool temperature: 40°C

The spiral flow length can be determined immediately after the injection operation.

g) Shrinkage and warpage

Shrinkage and warpage measurements were performed on tool boxes injection moulded on Nestal N1570/300 MPS.

| | |
|---|---|
| melt temperature: | 230°C |
| injection speed: | 100 mm/s |
| back pressure: | 100 bar |
| tool temperature: | 30°C |
| cooling time: | 15 sec |

Tool boxes are boxes with dimensions: width: 20cm; length: 40 cm; height: 10 cm.

Tool boxes for warpage measurements were made by holding pressure of 550 bar and holding pressure time of 6 sec.

Warpage is defined in percentage as:

$$\textbf{warpage \% = (a - b)*100/a}$$

wherein a is the breadth of the tool box at an edge of the box, and b is the breadth of the tool box at the middle of the box

Tool boxes for shrinkage are made by a variable holding pressure until the tool box is 325 gram. Holding pressure time is 12 sec.

Shrinkage can be measured in both flow direction and in cross direction.

h) Tensile properties

Tensile properties were measured on injection moulded samples according to ISO 527-2:1993. Tensile modulus was measured at a speed of 1 mm/min.

2. Examples

Polyethylene compositions 1 to 5 according to the invention were produced using the following procedure:

Into a 500 dm$^3$ loop reactor, operated at 95 °C and 56 bar, was introduced 34 kg/hour ethylene, 106 kg/hour propane, 28 g/hour hydrogen and the polymerisation catalyst *Lynx 200,* a MgCl$_2$ supported titanium containing catalyst available from Engelhard Corporation Pasadena, U.S.A., in a quantity such that PE production rate was 34 kg PE/hour.

The polymer (containing the active catalyst) was separated from the reaction medium and transferred to a gas phase reactor, operated at 85 °C and 20 bar, where additional hydrogen, ethylene and 1-butene comonomer were added so as to produce a polyethylene at 50 kg/hour.

The reaction conditions applied and the materials properties are listed in Tables I and II.

Table I:

| | | 1 | 2 | 3 | 4 | 5 |
|---|---|---|---|---|---|---|
| **loop reactor** | | | | | | |
| Temperature | °C | 95 | 95 | 95 | 95 | 95 |
| Pressure | bar | 56 | 56 | 56 | 56 | 56 |
| [C$_2$] | mol % | 1.2 | 1.2 | 1.2 | 1.2 | 1.2 |
| H$_2$/C$_2$ ratio | mol/kmol | 233 | 197 | 212 | 204 | 214 |

(continued)

|  |  | 1 | 2 | 3 | 4 | 5 |
|---|---|---|---|---|---|---|
| **loop reactor** |  |  |  |  |  |  |
| MFR$_2$ | g/10min | 60 | 40 | 40 | 41 | 36 |
| Density | kg/m$^3$ | > 965 | > 965 | > 965 | > 965 | > 965 |
| **gas phase reactor** |  |  |  |  |  |  |
| Temperature | °C | 85 | 85 | 85 | 85 | 85 |
| [C$_2$] | mol % | 12 | 15.2 | 15.5 | 11 | 8.2 |
| H$_2$/C$_2$ ratio | mol/kmol | 949 | 1276 | 1163 | 1313 | 1216 |
| C$_4$/C$_2$ ratio* | mol/kmol | 0 | 5 | 5 | 13 | 10 |
| Split | weight% | 59 | 60 | 60 | 60 | 50 |
| * In all examples 1-butene was comonomer was added to the gas phase reactor. All samples had an content of 1-butene of 0.02 wt%. | | | | | | |

In Table II, in addition to compositions 1 to 5, three commercially available polyethylene compositions were evaluated: Comparative Example 6 :bimodal HDPE, Comparative Examples 7 and 8: unimodal HDPE.

Test specimen (dog bones) were produced from all compositions by injection moulding on an Engel ES 330/65 cc90. The test specimen were made in accordance with ISO 294. The temperature of the melt was 210 °C, and the tool held a temperature of 40 °C. Holding pressure at 25 s and total cycle time of 45 s.

Table II:

|  | 1 | 2 | 3 | 4 | 5 | 6 Comp. | 7 Comp. | 8 Comp. |
|---|---|---|---|---|---|---|---|---|
| MFR$_2$ (190°C,2.16kg)(g/ 10min) | 3.2 | 7.8 | 5.0 | 11 | 7.0 | 8.0 | 12 | 4.0 |
| MFR$_5$ (190°C,5kg)(g/10 min) | 12 | 29 | 18 | 39 | 25 |  |  |  |
| MWD | 16 | 19 |  | 21 | 17 | 8 | 5 | 14 |
| Mw (kD) | 140 | 140 |  | 145 | 150 | 88 | 74 | 115 |
| Density (kg/m$^3$) | 965.8 | 963.3 | 963.1 | 961 | 961 | 964 | 962 | 957 |
| SHI$_{(1/100)}$ | 14 | 10 | 11 | 8.4 | 10 | 3 | 2.6 | 5.6 |
| -5.5 log MFR$_2$ [g/10min]/(g/10ml n) + 9.66 | 6.88 | 4.75 | 5.82 | 3.93 | 5.01 | 4.69 | 3.72 | 6.35 |
| Eta(100 rad/sec) (Pas) | 561 | 369 | 472 | 308 | 395 |  |  |  |
| Spiral Test 600 bar (cm) | 36,2 | 46,1 | 39,8 |  |  | 35 | 40 | 33 |
| Spiral Test 1000 bar (cm) | 52,8 | 65 | 56,9 |  |  | 49 | 55 | 47,8 |
| MFR$_2$ [g/10min]cm/(g/1 0min) + 45 | 48.2 | 52.8 | 50 | 56 | 52 | 53 | 57 | 49 |
| Spiral Test 1400 bar (cm) | 69,5 | 82 | 73,2 |  |  | 64 | 69 | 61,4 |
| Properties of injection moulded test specimen |  |  |  |  |  |  |  |  |
| shrinkage 325 g (% in flow direction) |  | 1,83 | 1,72 |  |  | 1,84 | 1,67 | 1,71 |
| warpage 550 bar/6 sec (%) |  | 4,3 | 4,3 |  |  | 3,8 | 2,2 | 5,9 |
| Charpy impact strength (23°C) (kJ/m$^2$) | 9,2 | 5,6 | 6,5 | 3,5 | 5,2 | 6,1 | 4,1 | 7,4 |
| Charpy impact strength (-20°C) (kJ/m2) | 6,1 | 3,9 | 4,1 | 3,3 | 3,7 | 5 | 3,9 | 4,2 |
| Tensile modulus (MPa) | 1090 | 1130 | 1020 | 1030 | 1010 | 1190 | 1000 | 900 |

The data in Table II show that the composition of the invention has a much higher shear thinning index than conventional unimodal or bimodal HDPE used for injection moulding, but, at the same time, yields injection moulded articles with good mechanical properties. Accordingly, the composition hereinbefore described will be easier to injection mould and will facilitate high throughputs while yielding injection moulded products of high quality.

Table II also shows that the HDPE described herein with an $MFR_2$ value of about 5 g/10 min behaves in a spiral test like a conventional unimodal polyethylene having a $MFR_2$ of about 12 g/10 min. This is advantageous in injection moulding since it enables a lower melting temperature to be used, hence the moulded article does not need to be cooled for so long in the mould prior to removal of the moulded article. Correspondingly, the number of moulded articles per unit time can be significantly increased, while, as stated, the good mechanical properties of the moulded articles are maintained.

In order to measure how far the injection moulding temperature can be lowered for the compositions of the invention compared to a reference material, but still obtaining the same flow, spiral flow measurements were performed at different temperatures. The flow of the materials of Examples 2, 3 and that of Comparative Example 8, was measured after reducing the temperature from 230 °C in 5 °C intervals. The material of Example 3 at a temperature of 200 °C obtained the same flow as that of Comparative Example 8 at a temperature of 230 °C. The material of Example 2 at even a temperature of 170 °C obtained the same flow as that of Comparative Example 8 at a temperature of 230 °C.

This comparison again shows impressively the improved flowability of the compositions of the invention.

**Claims**

1. A polyethylene composition wherein

    (i) the composition has an $MFR_2$ of 0.1 to 100 g/10min, and
    (ii) the spiral flow and the $MFR_2$ of the composition satisfy the following relation:

$$\text{Spiral flow}_{(1000 \text{ bar})} \text{ [cm]} \geq MFR_2 \text{ [g/10 min]cm/(g/10 min)} + 45$$

    (iii) the composition has a Charpy impact strength (23 °C) of 3 kJ/m$^2$ or more.

2. A polyethylene composition according to claim 1, wherein
the shear thinning index $SHI_{(1,100)}$ and the log $MFR_2$ of the composition satisfy the following relation:

$$SHI_{(1,100)} \geq -5.5 \log MFR_2 \text{ [g/10 min]/(g/10 min)} + 9.66.$$

3. A polyethylene composition according to claim 1 or 2 which comprises

    (A) a first ethylene homo- or copolymer fraction, and
    (B) a second ethylene homo- or copolymer fraction, wherein

    (iv) fraction (A) has a lower average molecular weight than fraction (B).

4. A polyethylene composition according to any of the preceding claims wherein the shear thinning index $SHI_{(1,100)}$ and the log $MFR_2$ of the composition satisfy the following relation:

$$SHI_{(1,100)} \leq -9 \log MFR_2 \text{ [g/10 min]/(g/10 min)} + 20.71.$$

5. A polyethylene composition according to any of the preceding claims wherein the spiral flow$_{(1000 \text{ bar})}$ and the $MFR_2$ of the composition according to the invention preferably satisfy the following relation:

$$\text{Spiral flow}_{(1000\ bar)}\ [cm] \le 2.5 MFR_2\ [g/10\ min] cm/(g/10\ min) + 48.$$

6. A polyethylene composition according to any of the preceding claims wherein the composition has a shear thinning index $SHI_{(1,100)}$ of at least 6.

7. A polyethylene composition according to any of the preceding claims wherein the composition has an $MFR_2$ of 1 to 50 g/10min.

8. A polyethylene composition according to any of the preceding claims wherein the composition has an tensile modulus of at least 900 MPa.

9. A polyethylene composition according to any of the preceding claims wherein the composition has a molecular weight distribution MWD of 5 to 60.

10. A polyethylene composition according to any of the preceding claims wherein the composition has a density of 930 kg/m$^3$ or higher.

11. A polyethylene composition according to any of the preceding claims wherein fraction (A) has an $MFR_2$ of 10 g/10min to 1000 g/10 min.

12. A polyethylene composition according to any of the preceding claims wherein fraction (A) is an ethylene homopolymer.

13. A polyethylene composition according to any of the preceding claims wherein fraction (B) is an ethylene copolymer with 0.001 mol% to 0.3% of an alpha-olefin comonomer.

14. A polyethylene composition according to any of the preceding claims wherein the composition is produced in a multistage reaction.

15. A process for the production of a polyethylene composition according to any of claims 1 to 14 wherein the fractions of the composition are produced in different stages of a multistage process.

16. Process according to claim 15 comprising the steps of

   (i) polymerising ethylene monomers, and optionally one or more alpha-olefin comonomers, in the presence of a Ziegler-Natta catalyst to obtain a first ethylene homo- or copolymer fraction (A)
   (ii) polymerising ethylene monomers, and optionally one or more alpha-olefin comonomers, in the presence of a Ziegler-Natta catalyst to obtain a second ethylene homo- or copolymer fraction (B) having a higher average molecular weight than fraction (A),

   wherein the second polymerisation step is carried out in the presence of the polymerization product of the first step.

17. A process according to claims 15 or 16 wherein the polymerization to obtain fraction (A) is carried out in a loop reactor.

18. A process according to any of claims 15 to 17 wherein the polymerization to obtain fraction (B) is carried out in a gas phase reactor.

19. A process according to any of claims 15 to 18 wherein the first polymerisation step is preceded by a prepolymerisation step.

20. An injection moulded article, comprising the polyethylene composition according to any of claims 1 to 14.

21. The injection moulded article according to claim 20 wherein the article is a transport packaging or houseware article.

22. A process for preparing the injection moulded article according to claim 20 or 21 wherein the process comprises an injection moulding step.

23. Use of the polyethylene composition according to any of claims 1 to 14 for injection moulding.

**Patentansprüche**

1. Polyethylenzusammensetzung, wobei:

   (i) die Zusammensetzung einen MFR$_2$-Wert von 0,1 bis 100 g/10 min hat,
   (ii) die Spiralströmung und die MFR$_2$ der Zusammensetzung in folgendem Zusammenhang stehen:

$$\text{Spiralströmung}_{(1000 \text{ bar})} \text{ [cm]} \geq \text{MFR}_2 \text{ [g/10 min]cm/(g/10 min)} + 45$$

   (iii) die Zusammensetzung eine Kerbschlagzähigkeit nach Charpy (23°C) von 3 kJ/m$^2$ oder mehr aufweist.

2. Polyethylenzusammensetzung nach Anspruch 1, wobei:

   der Strukturviskositätsindex SHI$_{(1.100)}$ und der Wert log MFR$_2$ der Zusammensetzung folgenden Zusammenhang aufweisen:

$$\text{SHI}_{(1.100)} \geq -5,5 \log \text{MFR}_2 \text{ [g/10 min]/(g/10 min)} + 9,66.$$

3. Polyethylenzusammensetzung nach Anspruch 1 oder 2, welche umfaßt:

   (A) einen ersten Anteil aus einem Ethylenhomo- oder -copolymer und
   (B) einen zweiten Anteil aus einem Ethylenhomo- oder -copolymer,

   wobei

   (iv) der Anteil (A) ein geringeres durchschnittliches Molekulargewicht als der Anteil (B) hat.

4. Polyethylenzusammensetzung nach einem der vorstehenden Ansprüche, wobei der Strukturviskositätsindex SHI$_{(1.100)}$ und der Wert log MFR$_2$ der Zusammensetzung folgenden Zusammenhang aufweisen:

$$\text{SHI}_{(1.100)} \leq -9 \log \text{MFR}_2 \text{ [g/10 min]/(g/10 min)} + 20,71.$$

5. Polyethylenzusammensetzung nach einem der vorstehenden Ansprüche, wobei die Spiralströmung$_{(1000 \text{ bar})}$ und der MFR$_2$-Wert der erfindungsgemäßen Zusammensetzung vorzugsweise folgenden Zusammenhang aufweisen:

$$\text{Spiralströmung}_{(1000 \text{ bar})} \text{ [cm]} \leq 2,5 \text{ MFR}_2 \text{ [g/10 min]cm/(g/10 min)} + 48.$$

6. Polyethylenzusammensetzung nach einem der vorstehenden Ansprüche, wobei die Zusammensetzung einen Strukturviskositätsindex SHI$_{(1.100)}$ von mindestens 6 aufweist.

7. Polyethylenzusammensetzung nach einem der vorstehenden Ansprüche, wobei die Zusammensetzung einen MFR$_2$-Wert von 1 bis 50 g/10 min aufweist.

8. Polyethylenzusammensetzung nach einem der vorstehenden Ansprüche, wobei die Zusammensetzung einen Zugmodul von mindestens 900 MPa aufweist.

9. Polyethylenzusammensetzung nach einem der vorstehenden Ansprüche, wobei die Zusammensetzung eine Molekulargewichtsverteilung MWD von 5 bis 60 aufweist.

10. Polyethylenzusammensetzung nach einem der vorstehenden Ansprüche, wobei die Zusammensetzung eine Dichte von 930 kg/m$^3$ oder mehr aufweist.

11. Polyethylenzusammensetzung nach einem der vorstehenden Ansprüche, wobei der Anteil (A) einen MFR$_2$-Wert von 10 g/10 min bis 1000 g/10 min aufweist.

12. Polyethylenzusammensetzung nach einem der vorstehenden Ansprüche, wobei der Anteil (A) ein Ethylenhomopolymer ist.

13. Polyethylenzusammensetzung nach einem der vorstehenden Ansprüche, wobei der Anteil (B) ein Ethylencopolymer mit 0,001 Mol-% bis 0,3 % eines α-Olefin-Comonomers ist.

14. Polyethylenzusammensetzung nach einem der vorstehenden Ansprüche, wobei die Zusammensetzung in einer mehrstufigen Reaktion erzeugt wird.

15. Verfahren zur Herstellung einer Polyethylenzusammensetzung nach einem der Ansprüche 4 bis 14, wobei die Anteile der Zusammensetzung in unterschiedlichen Stufen eines mehrstufigen Verfahrens erzeugt werden.

16. Verfahren nach Anspruch 15, das die folgenden Schritte aufweist:

i) Polymerisieren von Ethylenmonomeren und gegebenenfalls einem oder mehreren α-Olefin-Comonomeren in Gegenwart eines Ziegler-Natta-Katalysators, wodurch ein erster Anteil (A) aus einem Ethylenhomo- oder -copolymer erhalten wird,
(ii) Polymerisieren von Ethylenmonomeren und gegebenenfalls einem oder mehreren α-Olefin-Comonomeren in Gegenwart eines Ziegler-Natta-Katalysators, wodurch ein zweiter Anteil (B) aus einem Ethylenhomo- oder -copolymer erhalten wird, der ein höheres durchschnittliches Molekulargewicht als der Anteil (A) hat,

wobei der zweite Polymerisationsschritt in Gegenwart des Polymerisationsproduktes vom ersten Schritt durchgeführt wird.

17. Verfahren nach den Ansprüche 15 oder 16, wobei die Polymerisation, um den Anteil (A) zu erhalten, in einem Reaktor mit geschlossenem Kreis durchgeführt wird.

18. Verfahren nach einem der Ansprüche 15 bis 17, wobei die Polymerisation, um den Anteil (B) zu erhalten, in einem Gasphasenreaktor durchgeführt wird.

19. Verfahren nach einem der Ansprüche 15 bis 18, wobei dem ersten Polymerisationsschritt ein Vorpolymerisationsschritt vorausgeht.

20. Spritzgußgegenstand, der die Polyethylenzusammensetzung nach einem der Ansprüche 1 bis 14 umfaßt.

21. Spritzgußgegenstand nach Anspruch 20, wobei der Gegenstand eine Transportverpackung oder ein Haushaltsgegenstand ist.

22. Verfahren zur Herstellung des Spritzgußgegenstandes nach einem der Ansprüche 20 oder 21, wobei das Verfahren einen Spritzgießschritt umfaßt.

23. Verwendung der Polyethylenzusammensetzung nach einem der Ansprüche 1 bis 14 für das Spritzgießen.

**Revendications**

1. Composition à base de polyéthylène, dans laquelle :

(i) la composition a un indice de fluidité à l'état fondu $MFR_2$ de 0,1 à 100 g/10 min,

(ii) l'écoulement hélicoïdal et l'indice $MFR_2$ de la composition satisfont à la relation suivante :

$$\text{Ecoulement hélicoïdal}_{(1000\text{ bars})}[cm] \geq MFR_2 \text{ [g/10 min]cm/(g/ 10 min)} + 45$$

(iii) la composition a une résistance aux chocs Charpy (23 °C) de 3 $kJ/m^2$ ou plus.

2. Composition à base de polyéthylène selon la revendication 1, dans laquelle l'indice de fluidification par cisaillement $SHI_{(1100)}$ et le logarithme de l'indice $MFR_2$ de la composition, satisfont à la relation suivante :

$$SHI_{(1100)} \geq -5,5 \log MFR_2 \text{ [g/10 min]/(g/10 min)} + 9,66.$$

3. Composition à base de polyéthylène selon la revendication 1 ou 2, qui comprend :

(A) une première fraction d'homo ou copolymère d'éthylène, et
(B) une deuxième fraction d'homo ou copolymère d'éthylène, dans laquelle :

(iv) la fraction (A) a un poids moléculaire moyen inférieur à celui de la fraction (B).

4. Composition à base de polyéthylène selon l'une quelconque des revendications précédentes, dans laquelle l'indice de fluidification par cisaillement $SHI_{(1100)}$ et le logarithme de l'indice $MFR_2$ de la composition satisfont à la relation suivante :

$$SHI_{(1100)} \leq -9 \log MFR_2 \text{ [g/10 min]/(g/10 min)} + 20,71.$$

5. Composition à base de polyéthylène selon l'une quelconque des revendications précédentes, dans laquelle l'écoulement hélicoïdal$_{(1000\text{ bars})}$ et l'indice $MFR_2$ de la composition selon l'invention satisfont de préférence à la relation suivante :

$$\text{Ecoulement hélicoïdal}_{(1000\text{ bars})}[cm] \leq 2,5 MFR_2 \text{ [g/10 min]cm/(g/10 min)} + 48.$$

6. Composition à base de polyéthylène selon l'une quelconque des revendications précédentes, dans laquelle la composition a un indice de fluidification par cisaillement $SHI_{(1100)}$ d'au moins 6.

7. Composition à base de polyéthylène selon l'une quelconque des revendications précédentes, dans laquelle la composition a un indice $MFR_2$ de 1 à 50 g/10 min.

8. Composition à base de polyéthylène selon l'une quelconque des revendications précédentes, dans laquelle la composition a un module de tension d'au moins 900 MPa.

9. Composition à base de polyéthylène selon l'une quelconque des revendications précédentes, dans laquelle la composition a une distribution de poids moléculaire MWD de 5 à 60.

10. Composition à base de polyéthylène selon l'une quelconque des revendications précédentes, dans laquelle la composition à une masse volumique de 930 $kg/m^3$ ou plus.

11. Composition à base de polyéthylène selon l'une quelconque des revendications précédentes, dans laquelle la fraction (A) a un indice $MFR_2$ de 10 g/10 min à 1 000 g/10 min.

**12.** Composition à base de polyéthylène selon l'une quelconque des revendications précédentes, dans laquelle la fraction (A) est un homopolymère d'éthylène.

**13.** Composition à base de polyéthylène selon l'une quelconque des revendications précédentes, dans laquelle la fraction (B) est un copolymère d'éthylène avec de 0,001 mole % à 0,3 % d'un comonomère alpha-oléfinique.

**14.** Composition à base de polyéthylène selon l'une quelconque des revendications précédentes, dans laquelle la composition est produite dans une réaction à plusieurs étapes.

**15.** Procédé pour la production d'une composition à base de polyéthylène selon l'une quelconque des revendications 1 à 14, dans lequel les fractions de la composition sont produites dans différentes étapes d'un procédé à plusieurs étapes.

**16.** Procédé selon la revendication 15, comprenant les étapes consistant à :

i) polymériser des monomères de type éthylène, et éventuellement un ou plusieurs comonomères alpha-oléfiniques, en présence d'un catalyseur de Ziegler-Natta, pour obtenir une première fraction d'homo ou copolymère d'éthylène (A),
ii) polymériser des monomères de type éthylène et éventuellement un ou plusieurs comonomères alpha-oléfiniques, en présence d'un catalyseur de Ziegler-Natta, pour obtenir une deuxième fraction d'homo ou copolymère d'éthylène (B) ayant un poids moléculaire moyen supérieur à celui de la fraction (A),

dans lequel la deuxième étape de polymérisation est effectuée en présence du produit de polymérisation de la première étape.

**17.** Procédé selon la revendication 15 ou 16, dans lequel la polymérisation pour obtenir la fraction (A) est effectuée dans un réacteur en boucle.

**18.** Procédé selon l'une quelconque des revendications 15 à 17, dans lequel la polymérisation pour obtenir la fraction (B) est effectuée dans un réacteur à phase gazeuse.

**19.** Procédé selon l'une quelconque des revendications 15 à 18, dans lequel la première étape de polymérisation est précédée par une étape de prépolymérisation.

**20.** Article moulé par injection, comprenant la composition à base de polyéthylène selon l'une quelconque des revendications 1 à 14.

**21.** Article moulé par injection selon la revendication 20, dans lequel l'article est un emballage de transport ou un ustensile domestique.

**22.** Procédé de préparation de l'article moulé par injection selon la revendication 20 ou 21, dans lequel le procédé comprend une étape de moulage par injection.

**23.** Utilisation de la composition à base de polyéthylène selon l'une quelconque des revendications 1 à 14, pour un moulage par injection.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9744371 A
- WO 9618662 A

- WO 0022040 A